# EUROPÄISCHE PATENTANMELDUNG

(11) **EP 0 815 733 A2**
(43) Veröffentlichungstag der Anmeldung: **07.01.1998**
(21) Anmeldenummer: 97111126.5
(22) Anmeldetag: 03.07.1997
(51) Int. Cl.: A23B 4/048, A23B 4/052

(54) **Verfahren zum Räuchern von Lebensmitteln sowie Vorrichtung hierfür**

(30) Priorität: 05.07.1996 DE 19627227
(71) Anmelder: GERMOS-FESSMANN GMBH & CO. KG, D-73630 Remshalden-Grunbach (DE)
(72) Erfinder: Fessmann, Klaus-Dieter, 73630 Remshalden (DE)
(74) Vertreter: Ostertag, Ulrich

(57) **Zusammenfassung**

Es wird ein Verfahren zum kombinierten Räuchern und Kochen/Garen von Lebensmitteln vorgeschlagen, bei welchem in das in einer Behandlungskammer (10) umgewälzte Behandlungsmedium ein Gemisch aus Heißdampf und Flüssigrauchdampf eingespeist wird, welches von einer Mischdüsenanordnung (22) erzeugt wird, die mit einer Heißdampfleitung (30) und einer Flüssigrauchleitung (50) verbunden sind.

## Beschreibung

Die Erfindung betrifft ein Verfahren zum Räuchern von Lebensmitteln gemäß dem Oberbegriff des Anspruches 1 sowie eine Vorrichtung hierfür.

Ein gattungsgemäßes Verfahren ist in der FR-A-2 201 038 beschrieben. Bei ihm erfolgt das Räuchern der Lebensmittel dadurch, daß man in das durch die Behandlungskammer umgewälzte Behandlungsmedium (Luft) fein verteilte Flüssigrauchtröpfchen einspeist, welche ggf. an einer beheizten Fläche verdampft werden.

Bei einem anderen bekannten Räucherverfahren wird Flüssigrauch in der Behandlungskammer unter Verwendung von Preßluft zerstäubt. Dabei wird für die Dauer der Zerstäubung die Umwälzung des Behandlungsmediums unterbrochen.

Bei einem aus der DE 42 34 656 C2 bekannten Räucherverfahren wird Flüssigrauch direkt in den Ansaugstutzen eines Gebläses eingesprüht, mit welchem das Behandlungsmedium in der Behandlungskammer umgewälzt wird.

Die bekannten Verfahren stellen bezüglich der Gleichmäßigkeit, der Farbausprägung und Farbstabilität sowie bisweilen bezüglich des Geschmacks der Produkte nicht vollständig zufrieden. Soweit gesonderte Heizflächen im Weg des umgewälzten Behandlungsmediums (in der Regel überwiegend Luft) angeordnet sind, sind diese verschmutzungs-, verschleiß- und störanfällig.

Den bekannten Verfahren ist ferner gemeinsam, daß die Gesamt-Herstellungszeit für mit Flüssigrauch geräucherte Lebensmittel verhältnismäßig lang ist, da das Räuchern und ein zusätzlich notwendiges Kochen oder Garen der Lebensmittel in zwei aufeinanderfolgenden Behandlungsgängen erfolgt.

Durch die vorliegende Erfindung soll daher ein Verfahren zum Räuchern von Lebensmitteln mittels Flüssigrauch angegeben werden, welches einerseits gute Gleichmäßigkeit, zufriedenstellende Farbausprägung und Farbstabilität sowie befriedigenden Geschmack der Lebensmittel gewährleistet, dabei aber zugleich auch eine raschere Gesamt-Herstellungszeit der Lebensmittel ermöglicht.

Diese Aufgabe ist erfindungsgemäß gelöst durch ein Verfahren mit den im Anspruch 1 angegebenen Merkmalen.

Bei dem erfindungsgemäßen Verfahren erfolgt das Versprühen und Verdampfen des Flüssigrauches und sein Vermischen mit Heißdampf gleichzeitig. Auf diese Weise ist ein sehr effektives und homogenes Verteilen des Flüssigrauches im Behandlungsmedium gewährleistet.

Durch das Gemisch aus Heißdampf und Flüssigrauchdampf wird in das Behandlungsmedium Wärme hineingetragen.

Der Flüssigrauch schlägt sich in der ersten Behandlungsphase, in welcher die in die Behandlungskammer eingebrachten Lebensmittel kälter sind als das Behandlungsmedium, auf den Lebensmitteln nieder, sodaß diese intensiv und gut gleichförmig mit dem Flüssigrauch in Kontakt kommen.

Die Lebensmittel werden im Laufe des so durchgeführten Räucherns zunehmend erwärmt. In einer zweiten Behandlungsphase wird dem umgewälzten Behandlungsmedium reiner Heißdampf zugeführt. In dieser Behandlungsphase besteht dann ein Gleichgewicht des Flüssigrauchdampfes, da sich die Temperatur der Lebensmittel von der des Behandlungsmediums nicht mehr stark unterscheidet. In dieser zweiten Behandlungsphase werden dann die Lebensmittel zugleich fertig gegart oder gekocht.

Bei dem erfindungsgemäßen Verfahren sind somit Räuchern, Garen und/oder Kochen zusammengefaßt, und es entfallen Stillstandszeiten. Dadurch verkürzt sich auch die Gesamtherstellungszeit der geräucherten Lebensmittel.

Ein während der ersten Phase noch in der Anlage verbliebener Flüssigrauch wird in der zweiten Phase vollständig ausgenutzt und auf die Lebensmittel niedergeschlagen.

Da in der zweiten Behandlungsphase dem Behandlungsmedium reiner Heißdampf zugeführt wird, erhält man eine Selbstreinigung der Anlage in der zweiten Behandlungsphase.

Vorteilhafte Weiterbildungen der Erfindung sind in Unteransprüchen angegeben.

Nachstehend wird die Erfindung anhand eines Ausführungsbeispieles unter Bezugnahme auf die Zeichnung näher erläutert. In dieser zeigen:
- Figur 1:: eine schematische Darstellung einer Anlage zum Räuchern und Garen von Würsten oder ähnlichen Lebensmitteln; und
- Figur 2:: einen Schnitt durch eine in der Anlage nach Figur 1 verwendete Mischdüse.

In der Zeichnung ist mit 10 insgesamt eine Behandlungskammer bezeichnet, die mit einlaßseitigen Türen 12 und auslaßseitigen Türen 14 versehen ist, über welche das Beschicken und Entladen der Behandlungskammer mit Würste oder andere Lebensmittel tragenden Gestellen erfolgt.

An einen Deckenauslaß der Behandlungskammer 10 ist ein Einlaßstutzen 16 einer Mischkammer 18 angeschlossen. Diese enthält ein Heizregister 20 sowie stromab desselben angeordnet eine oder mehrere, beim gezeigten Ausführungsbeispiel zwei Mischdüsen 22. Letztere dienen dazu, Heißdampf mit Flüssigrauch zu vermischen. Die Mischdüsen 22 sind über erste Magnetventile 24 und einen Druckminderer 26 sowie ein Magnetventil 28 mit einer Heißdampfleitung 30 verbunden. Der Heißdampf in der Heißdampfleitung 30 steht typischerweise unter einem Druck von 6 bis 10 bar und hat eine entsprechende Temperatur von bis zu 180°C. Der Heißdampfdruck hinter dem Druckminderer 26 beträgt typischerweise etwa 4 bar.

Die Mischdüsen 22 sind stromauf eines Faltenbalges 32 angeordnet, der seinerseits mit dem Einlaß eines Gebläses 34 verbunden ist, wobei sie in der Mischkammer über einen Raumbereich verteilt sind, welcher axial mit dem Einlaß des Gebläses fluchtet. Letzteres wird durch einen Elektromotor 36 angetrieben. Ein Auslaßstutzen 38 des Gebläses 34 ist über einen Faltenbalg 40 und einen Umlenkanal 42 mit zwei seitlichen Verteilerschächten 44 verbunden, die sich unterhalb der Deckenwand durch die Behandlungskammer 10 erstrecken. Die Verteilerschächte 44 tragen jeweils eine Mehrzahl von Abgabedüsen 46, durch welche das Behandlungsmedium an das Innere der Behandlungskammer abgegeben wird.

Die Mischdüsen 22 sind mit ihren zweiten Eingängen über zweite Magnetventile 48 mit einer Flüssigrauchleitung 50 verbunden. Diese wird durch eine Druckpumpe 52, die über ein Magnetventil 53 aus einem Flüssigrauch-Vorratsbehälter 54 ansaugt, mit Flüssigrauch-Flüssigkeit beaufschlagt. Der Druck der Flüssigrauch-Flüssigkeit am Einlaß der Mischdüsen 22 wird vorzugsweise auf etwa 6 bar eingestellt.

Statt durch die Druckpumpe 52 kann Flüssigrauch auch dadurch aus dem Vorratsbehälter 54 ausgebracht werden, daß dieser mit Druckluft beaufschlagt wird.

Die oben beschriebene Behandlungskammer wird wie folgt betrieben: nach dem Beschicken mit neuen Würsten wird das Gebläse 34 angeschaltet und die Ware typischerweise gerötet und/oder getrocknet. Zum Räuchern werden die Magnetventile 24, 28 und 48 aufgesteuert. Dadurch wird von den Mischdüsen 22 ein Gemisch aus Heißdampf und Flüssigrauchdampf abgegeben, welches der durch das Gebläse 34 umgewälzten Luft zugesetzt wird. Diese hat somit hohen Feuchtigkeitsgehalt und wird gleichzeitig durch den zugeführten Heißdampf aufgewärmt. Beim Vorbeistreichen an den in die Behandlungskammer eingebrachten Würsten kondensiert Flüssigrauch auf den Würsten, die so das Raucharoma aufnehmen und gleichzeitig aufgewärmt werden.

Wurde in das Behandlungsmedium auf diese Weise eine zur Geschmackseinstellung der Produkte ausreichende Menge an Flüssigrauch eingebracht, so werden die Magnetventile 48 geschlossen, wobei aber die Magnetventile 24 und 28 offenbleiben. Durch den weiter zuströmenden Heißdampf werden die Mischdüsen 22 und die von diesen direkt angeströmten Anlageteile durch den Heißdampf gereinigt. Der weiterhin abgegebene Heißdampf führt zu weiterem Temperaturanstieg im Behandlungsmedium. In dieser zweiten Behandlungsphase werden die Würste oder anderen Produkte auf eine im wesentlichen konstante Gar- oder Kochtemperatur gebracht, die über eine zum Garen oder Kochen ausreichende Zeitspanne hinweg aufrechterhalten wird.

In dieser zweiten Behandlungsphase findet kein nennenswertes Kondensieren von Flüssigrauch auf den Oberflächen der Produkte mehr statt, die Produkte befinden sich aber in einem heißen Behandlungsmedium, das Flüssigrauchdampf enthält.

Nach Ablauf der Gar- oder Kochzeit wird dann die Heißdampfzufuhr abgestellt und - falls nicht schon vorher geschehen - das Heizregister 20 abgeschaltet.

Aus der obigen Beschreibung sind folgende Merkmale und Vorteile der beschriebenen kombinierten Räucher- und Koch/Gar-Anlage ersichtlich:
- Das Zuführen von Heißdampf und Flüssigrauch erfolgt an einer gemeinsamen Stelle des Kreislaufes des Behandlungsmediums und in einem gemeinsamen Bauteil, welches extern an die Behandlungskammer angesetzt ist.
- Hinter dem angesprochenen externen Bauteil ist das Gemisch aus Heißdampf und Flüssigrauch vollständig gebrauchsfertig. Es bedarf keiner weiteren Aufbereitung.
- Während des Einbringens des Flüssigrauches kann das Umwälzen des Behandlungsmediums durch die Behandlungskammer weiterhin erfolgen. Daher werden die Produkte sehr gut gleichmäßig behandelt.
- Das Räuchern und Kochen/Garen der Produkte erfolgt in einem einzigen Behandlungszyklus, welcher zwar bezüglich der Zugabe von Flüssigrauch zwei unterschiedliche Behandlungsphasen aufweist, im übrigen aber bezüglich des Umwälzens des hohen Feuchtigkeitsgehalt aufweisenden Behandlungsmediums und der Temperaturführung einen kombinierten Zyklus darstellt.
- Da das Konditionieren des Behandlungsmediums in einem externen Bauteil der Anlage erfolgt, können auch vorhandene Anlagen einfach für das erfindungsgemäße Verfahren nachgerüstet werden.
- Bezüglich der Emissionsminderung können die bekannten Einrichtungen weiterverwendet werden.
- Durch das Mischen von Heißdampf und Flüssigrauch wird eine sehr gleichförmige Verteilung des Flüssigrauches erhalten und das Behandlungsmedium aufgeheizt. Beide Faktoren begünstigen einen raschen Farbübergang und eine hohe Farbstabilität der Produkte.
- In der ersten Behandlungsphase erfolgt der Übergang des Flüssigrauches auf die Produkte durch Kondensation. Dies garantiert eine sehr gleichmäßige Beaufschlagung der Produkte mit Flüssigrauch.
- Durch die Temperatur und den Feuchtigkeitsgehalt des Behandlungsmediums erfolgt eine raschere Behandlung der Produkte, wodurch sich eine Verkürzung der Gesamtherstellungszeit ergibt.
- Durch die sehr feine Verteilung des Flüssigrauches im Behandlungsmedium sind Verluste, die auf Tropfenbildung von Flüssigrauch und Herabfallen dieser Tropfen auf den Boden der Behandlungskammer bedingt sind, sehr gering.
- Durch Variation des Druckes des Heißdampfes, der Menge zugesetzten Heißdampfes, der Menge zugesetzten Flüssigrauches, der Dauer der Behandlungsphasen und der Temperatur des Behandlungsmediums ergeben sich zahlreiche Beeinflussungsmöglichkeiten für das Herbeiführen bestimmter qualitativer Merkmale der Produkte.
- Die Betriebsparameter, die bei der oben beschriebenen Räucher- und Gar/Kochanlage und bei dem oben beschriebenen Räucher- und Gar/Kochverfahren für Lebensmittel verwendet werden, lassen sich gut reproduzierbar einstellen. Das Verfahren benötigt keine mechanisch aufwendigen und anfälligen Anlagenteile.

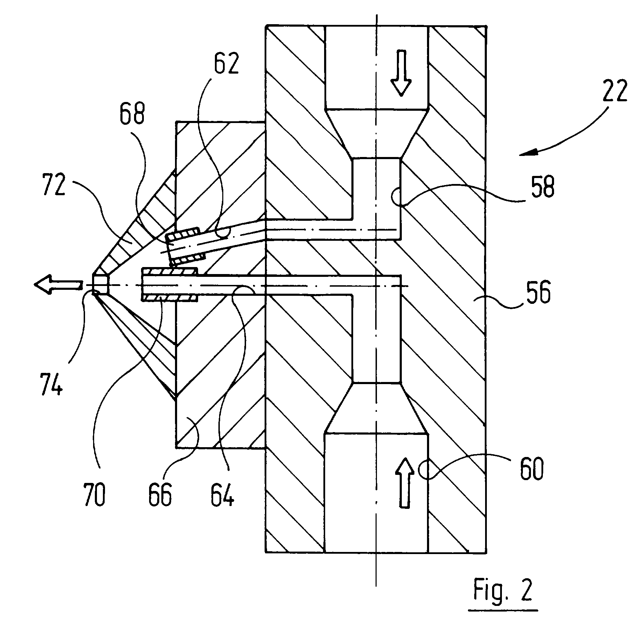

Die Mischdüse 22 kann im Detail den in Figur 2 gezeigten Aufbau haben:

In einem Grundblock 56 ist ein abgewinkelter Dampf-Einlaßkanal 58 und ein abgewinkelter Flüssigrauch-Einlaßkanal 60 vorgesehen. Diese stehen mit einem Dampfkanal 62 bzw. einem Flüssigrauchkanal 64 einer Düsenbasisplatte 66 in Verbindung. Dabei verläuft der Flüssigrauchkanal 64 senkrecht zur Ebene der Düsenbasisplatte 66, während die Achse des Dampfkanales 62 mit der Ebene der Düsenplatte 66 einen Winkel von etwa 72° einschließt.

Das Ende des Dampfkanales 62 trägt fluchtend eine Dampfdüse 68, das Ende des Flüssigrauchkanales 64 eine Flüssigrauchdüse 70.

Auf der Düsenbasisplatte 66 ist eine hohle kegelförmige Mischdüsenkappe 72 angeordent, deren Außenfläche einen Kegelöffnungswinkel von etwa 105° und deren Innenfläche einen Kegelöffnungswinkel von etwa 78° aufweist. In der Spitze der Mischdüsenkappe 72 ist eine Mischdüsenöffnung 74 vorgesehen, welche axial mit der Flüssigrauchdüse 70 fluchtet. Ferner ist der Anstellwinkel des Dampfdüse 68 so auf die Lage der Mischdüsenöffnung 74 abgestimmt, daß sich dort die Achsen von Dampfdüse 68 und Flüssigrauchdüse 70 schneiden.

Bei dem oben beschriebenen Ausführungsbeispiel wurde ein praktischer Anwendungsfall in Betracht gezogen, bei welchem Würste oder andere Fleischwaren in einer ersten Behandlungsphase geräuchert und in einer zweiten Behandlungsphase gekocht und/oder gegart werden.

In Abwandlung kann man als zweite Behandlungsphase auch eine solche wählen, bei welcher die zu behandelnden Produkte mit in ihrem Feuchtigkeitsgehalt eingestellter Luft und/oder mit Heißluft behandelt werden.

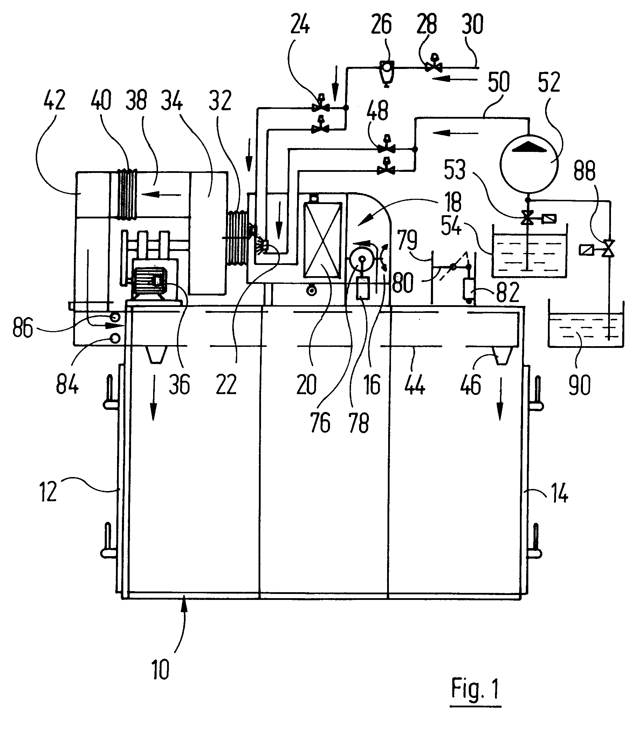

Hierzu wird, wie ebenfalls in Figur 1 eingezeichnet, in der Wand der Mischkammer 18 eine drehbare Klappe 76 vorgesehen, über welche das Kammerinnere mit der Umgebungsatmosphäre verbindbar ist. Zum Verstellen dieser Klappe zwischen einer in der Zeichnung wiedergegebenen Schließstellung und einer mehr oder weniger geöffneten Stellung ist ein Stellmotor 78 vorgesehen.

An der Deckenwand des Gehäuses 10 ist ein Auslaßstutzen 79 vorgesehen, in dem eine drehbare Klappe 80 angeordnet ist, die aus einer in der Zeichnung wiedergegebenen Schließstellung in eine mehr oder weniger geöffnete Stellung bewegbar ist, von welcher eine gestrichelt in Figur 1 angedeutet ist. Zum Verstellen der Klappe 80 dient ein weiterer Stellmotor 82.

Die Stellmotoren können, wie dargestellt, Arbeitszylinder, insbesondere Druckluftzylinder, oder auch Drehantriebe, z.B. Schrittmotoren sein.

Wünscht man mit der so modifizierten Anlage eine zweite Behandlungsphase durchzuführen, bei welcher die Produkte mit trockener, heißer Luft behandelt werden, so wird wie folgt gearbeitet:

Die Klappe 76 wird durch den Stellmotor 78 geöffnet, gleichzeitig wird durch den Stellmotor 82 die Klappe 80 geöffnet. Durch das Gebläse 34 wird somit stets ein Anteil der zirkulierten Luft über die Klappe 80 abgeführt, während eine entsprechende Menge Frischluft über die Klappe 76 aus der Umgebung angesaugt wird. Auf diese Weise sinkt der Feuchtigkeitsgehalt des zirkulierten Gasgemisches. Gleichzeitig wird die zirkulierte Luft unter Verwendung des Heizregisters 20 auf die gewünschte Temperatur erhitzt.

Die Steuerung des Heizregisters 20 und die Steuerung der Klappen 76, 80 kann unter Verwendung eines Temperaturfühlers 84 bzw. eines Feuchtigkeitsfühlers 86 erfolgen, die beim Einlaß der Behandlungskammer, z.B. am Ende des Umlenkkanales 42 vorgesehen sind, wobei gemäß dem Erreichen des gewünschten niedrigen Feuchtigkeitsgehalts die Klappen 76, 80 zunehmend geschlossen werden.

Bei einer weiteren Behandlungsart für zu räuchernde Produkte besteht die zweite Behandlungsphase in einer Phase einer Behandlung mit in der Feuchtigkeit eingestellter kühler Luft.

Dabei erfolgt ein notwendiges Absenken des Feuchtigkeitsgehaltes wie oben beschrieben.

Eine Feuchtigkeitserhöhung kann man z.B. durch Zumischen von Heißdampf oder auch dadurch bewerkstelligen, daß man unter Verwendung einer kleineren Menge Heißdampf in den Mischdüsen 22 Wasserdampf erzeugt. Hierzu wird den Mischdüsen 22 anstelle von Flüssigrauch-Flüssigkeit Wasser zugeführt. Dies kann unter Verwendung der Druckpumpe 52 erfolgen, welche ansaugseitig über ein Magnetventil 88 mit einem Vorratsbehälter 90 für Wasser verbindbar ist.

Durch entsprechendes Ansteuern der Magnetventile 53 und 88 kann man somit über die Mischdüsen 22 wahlweise Flüssigrauch-Flüssigkeit und/oder Wasser dem in das zirkulierte Gemisch einführen, wobei sich die abgegebenen Mengen über die Ventilöffnungszeiten (Impulsmodulation) vorgeben lassen.

## Patentansprüche

1. Verfahren zum Räuchern von Lebensmitteln, bei welchem durch eine Behandlungskammer ein Behandlungsmedium umgewälzt wird, welchem beim Umwälzen Flüssigrauch zugesetzt wird, dadurch gekennzeichnet, daß in einer ersten Behandlungsphase in das Behandlungsmedium ein Gemisch aus Heißdampf und Flüssigrauchdampf eingespeist wird und in einer zweiten Behandlungsphase nur Heißdampf und/oder Heißluft und/oder im Feuchtigkeitsgehalt eingestellte Luft eingespeist wird.

2. Verfahren nach Anspruch 1, dadurch gekennzeichnet, daß zur Herstellung des Gemisches aus Heißdampf und Flüssigrauchdampf Heißdampf und Flüssigrauchflüssigkeit in mindestens einer Düse vermischt werden.

3. Verfahren nach Anspruch 2, dadurch gekennzeichnet, daß der Druck des den Düsen zugeführten Heißdampfes zwischen 2 und 6 bar, vorzugsweise etwa 4 bar beträgt.

4. Verfahren nach Anspruch 2 oder 3, dadurch gekennzeichnet, daß der Druck des den Düsen zugeführten flüssigen Flüssigrauches zwischen 2 und 10 bar, vorzugsweise etwa 6 bar beträgt.

5. Vorrichtung zur Durchführung des Verfahrens nach einem der Ansprüche 1 bis 4, mit einer Behandlungskammer (10), mit einem Gebläse (34) zum Umwälzen von Behandlungsmedium durch die Behandlungskammer (10) sowie einer außerhalb der Behandlungskammer (10) liegenden Mischkammer (18), welche mit einem Einlaß an einen Auslaß, vorzugsweise einen Deckenauslaß der Behandlungskammer (10) angeschlossen ist und mit einem Auslaß an einen Einlaß des Gebläses (34) angeschlossen ist, dadurch gekennzeichnet, daß die Mischkammer (18) mindestens eine Mischdüse (22) zum Vermischen von Heißdampf und flüssigem Flüssigrauch zu einem Gemisch aus Heißdampf und Flüssigrauchdampf aufweist, welche mit einem Speiseeingang an eine Heißdampfleitung (30) und mit einem zweiten Speiseeingang an eine Flüssigrauchleitung (50) angeschlossen ist.

6. Vorrichtung nach Anspruch 5, mit einer in der Mischkammer (18) angeordneten Heizeinrichtung (20), dadurch gekennzeichnet, daß die Heizeinrichtung (20) stromauf der Mischdüsen (22) liegt.

7. Vorrichtung nach Anspruch 5 oder 6, dadurch gekennzeichnet, daß die Mischkammer (18) eine Mehrzahl von Mischdüsen (22) aufweist, welche über getrennte erste Steuerventile (24) mit der Heißdampfleitung (30) und über getrennte zweite Steuerventile (48) mit der Flüssigrauchleitung (50) verbunden sind.

8. Vorrichtung nach Anspruch 7, dadurch gekennzeichnet, daß die Mischdüsen (22) über einen dem Querschnitt des Einlasses (32) des Gebläses (34) entsprechenden Bereich der Mischkammer (18) verteilt sind.

9. Vorrichtung nach einem der Ansprüche 5 bis 8, dadurch gekennzeichnet, daß die Heißdampfleitung (30) über einen einstellbaren Druckminderer (26) mit den Mischdüsen (22) verbunden ist.
